# EUROPEAN PATENT APPLICATION

(11) **EP 4 478 098 A1**
(43) Date of publication of application: **18.12.2024**
(21) Application number: 23752883.1
(22) Date of filing: 08.02.2023
(51) Int. Cl.: G02B 6/12, G02B 6/122, G02B 6/125, G02B 6/42

(54) **OPTICAL WAVEGUIDE SUBSTRATE, OPTICAL WAVEGUIDE PACKAGE, AND LIGHT SOURCE MODULE**

(30) Priority: 10.02.2022 JP 2022019894
(71) Applicant: Kyocera Corporation, Kyoto-shi, Kyoto 612-8501 (JP)
(72) Inventor: MATSUNAGA, Shougo, Kyoto-shi, Kyoto 612-8501 (JP); ITAKURA, Yoshiaki, Kyoto-shi, Kyoto 612-8501 (JP)
(74) Representative: Viering, Jentschura & Partner mbB Patent- und Rechtsanwälte
(86) International application number: PCT/JP2023/004118
(87) International publication number: WO 2023/153419

(57) **Abstract**

An optical waveguide board includes a substrate, a cladding layer including a recess on an upper surface, element mount portions defined in the recess, and a plurality of cores in the cladding layer. The plurality of cores extends from the element mount portions to outside the recess in a plan view. The cladding layer includes, on the upper surface, a joint area being frame-shaped and surrounding the recess, and includes a plurality of ridges extending along the cores. At least one of the plurality of cores includes a part overlapping the joint area in a plan view. The part includes an oblique portion extending in a direction oblique to a width direction from an outer peripheral edge toward an inner peripheral edge of the joint area in the cladding layer.

## Description

### TECHNICAL FIELD

The present disclosure relates to an optical waveguide board, an optical waveguide package including the optical waveguide board, and a light source module including the optical waveguide package.

### BACKGROUND OF INVENTION

A known optical waveguide board is described in, for example, Patent Literature 1.

### CITATION LIST

### PATENT LITERATURE

Patent Literature 1: Japanese Unexamined Patent Application Publication No. 10-308555
Patent Literature 2: WO 2021/065078

### SUMMARY

In an aspect of the present disclosure, an optical waveguide board includes a substrate, a cladding layer, a plurality of element mount portions, and a plurality of cores. The substrate includes a first surface. The cladding layer is located on the first surface. The cladding layer includes a facing surface facing the first surface and an upper surface opposite to the facing surface. The cladding layer includes a recess on the upper surface. The plurality of element mount portions is located in the recess. The plurality of cores is located in the cladding layer. The plurality of cores extends from the recess to outside the recess in a plan view. The cladding layer includes, on the upper surface, a joint area being frame-shaped and surrounding the recess, and includes a plurality of ridges extending along the plurality of cores. At least one of the plurality of cores includes a part overlapping the joint area in a plan view. The part includes an oblique portion extending in a direction oblique to a width direction from an outer peripheral edge toward an inner peripheral edge of the joint area in the cladding layer.

In an aspect of the present disclosure, an optical waveguide package includes the optical waveguide board, and a lid covering an opening of the recess on the cladding layer in the optical waveguide board and bonded to the joint area with a bond.

In an aspect of the present disclosure, a light source module includes the optical waveguide package, and light emitters in the plurality of element mount portions in the optical waveguide package.

### BRIEF DESCRIPTION OF THE DRAWINGS

The objects, features, and advantages of the present disclosure will be more apparent from the following detailed description and the drawings.
FIG. 1 is an exploded perspective view of a light source module according to an embodiment of the present disclosure.
FIG. 2 is a plan view of the light source module.
FIG. 3 is a cross-sectional view of the light source module taken along section line III-III in FIG. 2, illustrating its structure.
FIG. 4 is an enlarged view of a part IV in FIG. 2, illustrating oblique portions of cores.
FIG. 5 is a cross-sectional view of a lid taken along section line V-V in FIG. 4, illustrating its joint structure.
FIG. 6 is a cross-sectional view of the cores taken along section line VI-VI in FIG. 4, illustrating a merging portion.
FIG. 7 is a partially enlarged view of a joint area illustrating the oblique portions including curved portions.
FIG. 8A is a schematic plan view of the oblique portions illustrating their arrangement.
FIG. 8B is a schematic plan view of the oblique portions illustrating their arrangement.
FIG. 9A is a cross-sectional view of a lid different from the lid in FIG. 5, illustrating its joint structure.
FIG. 9B is a cross-sectional view of a lid different from the lid in FIG. 5, illustrating its joint structure.
FIG. 10A is a cross-sectional view of a lid with a still different joint structure.
FIG. 10B is a cross-sectional view of a lid with a still different joint structure.
FIG. 11A is a schematic diagram of oblique portions of two cores, illustrating their arrangement.
FIG. 11B is a schematic diagram of the oblique portions of the two cores, illustrating their arrangement.
FIG. 12 is a schematic diagram of the cores in an oblique joint area, illustrating their arrangement.
FIG. 13 is a plan view of a light source module according to another embodiment.
FIG. 14 is an enlarged plan view of a part XIV in FIG. 13 in the other embodiment.

### DESCRIPTION OF EMBODIMENTS

A known optical waveguide board includes cores that define optical waveguides in a cladding on a substrate. For example, Patent Literature 1 describes an optical waveguide board including a surface planarizing layer on an upper surface of the cladding. The upper surface has irregularities resulting from the cores. For example, Patent Literature 2 describes an optical waveguide package including element mount portions sealed with a lid bonded to protrusions extending along the cores with a metal member between the lid and the protrusions.

With the known techniques in Patent Literatures 1 and 2, the lid is bonded to, with a bond, the upper surface of the cladding having irregularities or the protrusions resulting from the cores. This structure lowers the airtightness of the element mount portions. Thus, an optical waveguide board, an optical waveguide package, and a light source module including element mount portions with higher sealing reliability are awaited.

An embodiment of the present disclosure will now be described with reference to the drawings.

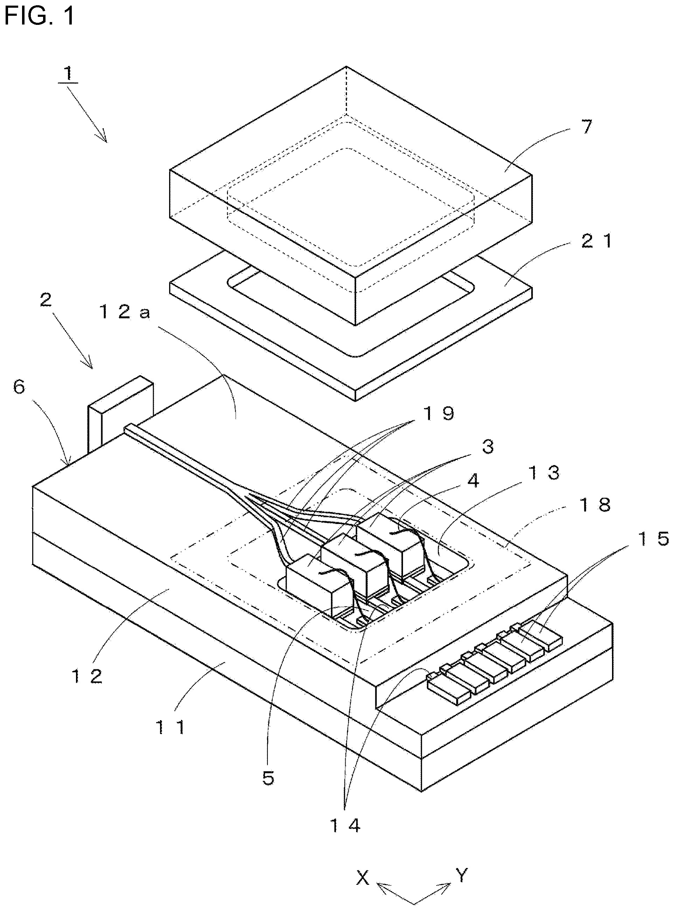

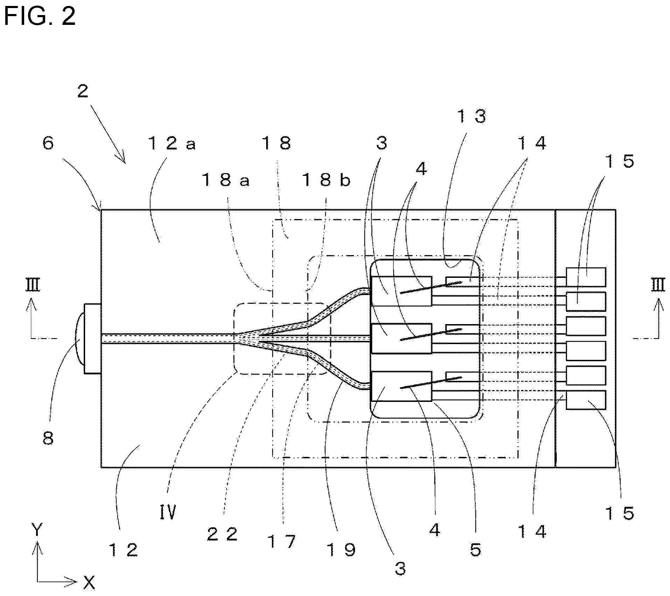

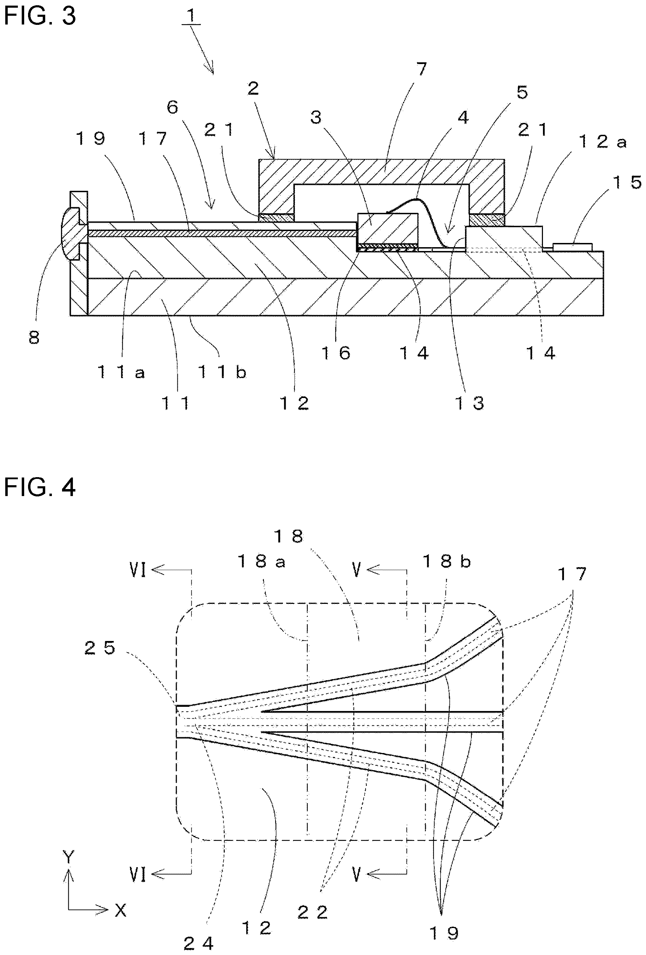

FIG. 1 is an exploded perspective view of a light source module according to an embodiment of the present disclosure with a lid removed. FIG. 2 is a plan view of the light source module with the lid and a bond removed. FIG. 3 is a cross-sectional view of the light source module taken along section line III-III in FIG. 2, illustrating its structure. In the present embodiment, a light source module 1 includes an optical waveguide package 2 and light emitters 3.

In the present embodiment, an optical waveguide board 6 includes a substrate 11 including a first surface 11a, a cladding layer 12 on the first surface 11a and including a facing surface facing the first surface 11a and an upper surface 12a opposite to the facing surface. The cladding layer 12 includes a recess 13 on the upper surface 12a. The optical waveguide board 6 also includes multiple element mount portions 5 in the recess 13, and multiple cores 17 in the cladding layer 12. The multiple cores 17 extend from the recess 13 to outside the recess 13 in a plan view. The cladding layer 12 includes, on the upper surface 12a, a joint area 18 that is frame-shaped and surrounds the recess 13, and includes multiple ridges 19 extending along the cores 17. At least one of the multiple cores 17 includes a part overlapping the joint area 18 in a plan view. The part includes an oblique portion 22 extending in a direction oblique to a width direction from an outer peripheral edge 18a toward an inner peripheral edge 18b of the joint area 18 in the cladding layer 12.

The optical waveguide package 2 includes the optical waveguide board 6 including element mount portions 5 on which the light emitters 3 are mounted, a lid 7 sealing the element mount portions 5, and a condenser lens 8 that transmits light emitted from the light emitters 3. The condenser lens 8 may be replaced with a mirror that reflects light emitted from the light emitters 3.

The substrate 11 includes multiple dielectric layers of a ceramic material or an organic material stacked on one another. The cladding layer 12 is made of a glass material or a resin material. The substrate 11 is a rectangular stack in a plan view. The substrate 11 includes a first surface 11a (refer to FIG. 3) and a second surface 11b.

The substrate 11 may include multiple dielectric layers stacked on one another. The substrate 11 may be a ceramic wiring board including dielectric layers made of a ceramic material. Examples of the ceramic material used for the ceramic wiring board include sintered aluminum oxide, sintered mullite, sintered silicon carbide, sintered aluminum nitride, and sintered glass ceramic. For the substrate 11 serving as a ceramic wiring board, the dielectric layers include conductors such as connection pads, internal wiring conductors, and external connection terminals for electrical connection between light emitters and an external circuit and between a light receiver and the external circuit.

For the substrate 11 including dielectric layers stacked on one another, the substrate 11 may be an organic wiring board including dielectric layers each made of, for example, an organic material. The organic wiring board is, for example, a printed wiring board, a build-up wiring board, or a flexible wiring board. Examples of the organic material used for the organic wiring board include an epoxy resin, a polyimide resin, a polyester resin, an acryl resin, a phenolic resin, and a fluororesin.

The lid 7 may be made of a glass material such as quartz, borosilicate, or sapphire.

The cladding layer 12 is bonded to the first surface 11a of the substrate 11. The cladding layer 12 includes the recess 13 on the upper surface 12a opposite to the facing surface facing the first surface 11a of the substrate 11. The recess 13 is open in a substantially quadrangular shape in a plan view. The element mount portions 5, on which the light emitters 3 and other components are mounted, are located inside the recess 13.

The light emitters 3 and other components are bonded to electrical wires 14 on a bottom surface of the recess 13 with a conductive bond 16 (refer to FIG. 3), such as solder, a brazing material, or a metal paste. Each of the light emitters 3 includes, on its lower surface, an electrode electrically connected to the corresponding electrical wire 14 with the conductive bond 16. Each of the light emitters 3 includes, on its upper surface, an electrode electrically connected to another electrical wire 14 with a bonding wire 4. The electrical wires 14 extend outside the recess 13 and are connected to respective external connection terminals 15 on the substrate 11. The external connection terminals 15 are connected to an external device or external equipment, such as a power supply circuit, through external wiring (not illustrated).

The cladding layer 12 contains multiple (e.g., three) cores 17 that define optical waveguides. The cores 17 extend from the element mount portions 5 to outside the recess 13 in a plan view. Each of the cores 17 includes an incident end located on an inner wall of the recess 13 to face an emission surface of the corresponding light emitter 3 mounted on the element mount portions 5 inside the recess 13. Each of the cores 17 is made of a light guide material with a higher light refractive index than the cladding layer 12, such as quartz glass. Each of the cores 17 totally reflects light emitted from the corresponding light emitter 3 inside the core 17 and guides the light in an X-direction in FIGs. 1 and 2 while the light being confined in the optical waveguide.

Note that, in the present embodiment, the light emitters 3 are three laser diodes (LDs) that individually emit light of three colors, or red, green, and blue. The cores 17 include incident ends optically connected (optically coupled) to the respective LDs and include emission ends optically connected to the condenser lens 8. In another embodiment, the light emitters 3 are not limited to LDs, but may be, for example, light-emitting diodes (LEDs) or vertical-cavity surface-emitting lasers (VCSELs).

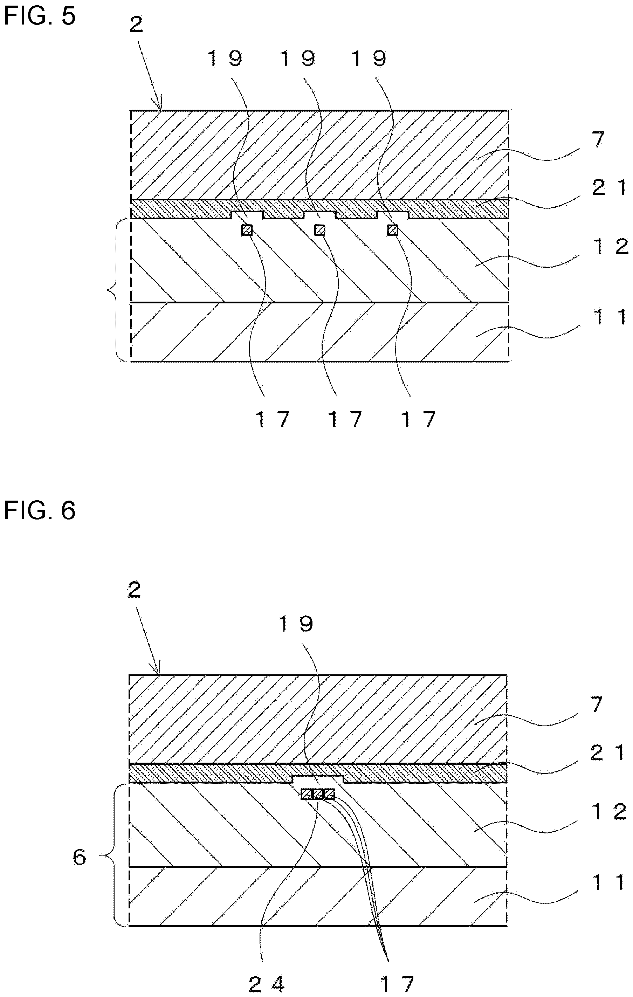

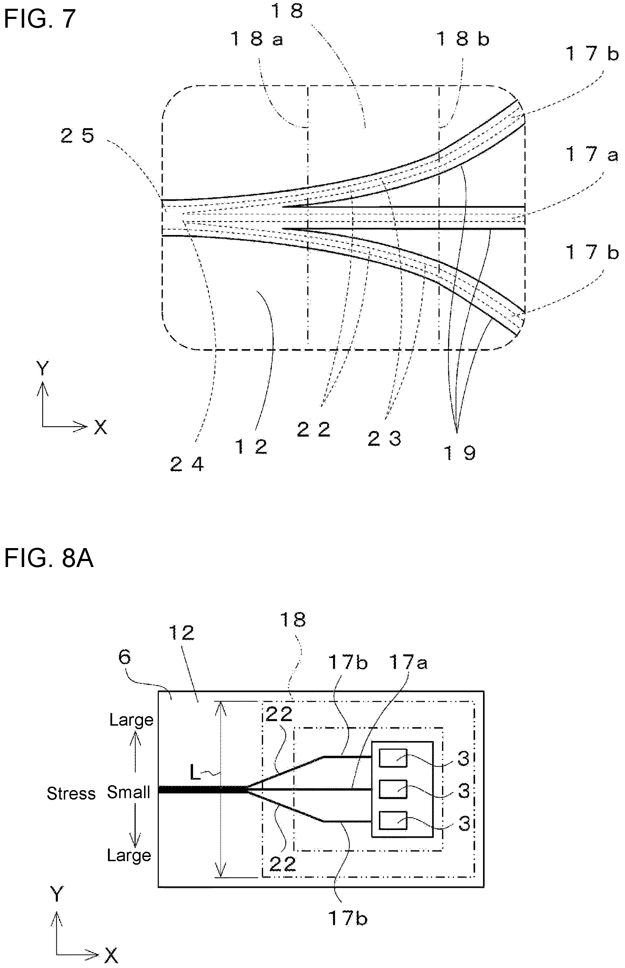

FIG. 4 is an enlarged view of a part IV in FIG. 2 illustrating the oblique portions of the cores. FIG. 5 is a cross-sectional view of the lid taken along section line V-V in FIG. 4, illustrating its joint structure. FIG. 6 is a cross-sectional view of the cores taken along section line VI-VI in FIG. 4, illustrating a merging portion. FIG. 7 is a partially enlarged view of the joint area illustrating the oblique portions including curved portions. The joint area 18 for bonding the lid 7 is defined as a quadrangular frame in a plan view on the upper surface 12a of the cladding layer 12. The joint area 18 surrounds the recess 13. The lid 7 is a thin box made of, for example, glass, and includes an opening in a lower surface. The lid 7 is bonded to the cladding layer 12 with a bond 21. The bond 21 may be, for example, solder, a brazing material, a resin, or a metal paste.

The cladding layer 12 includes three ridges 19 on the upper surface 12a. The three ridges 19 protrude along the respective cores 17. Each of the ridges 19 may be formed when the cladding layer 12 is formed by, for example, chemical vapor deposition (CVD), sputtering, or flame hydrolysis deposition (FHD). Thus, the joint area 18 has irregularities in its area overlapping the ridges 19 in a plan view. The irregularities increase an area of contact between the cladding layer 12 and the bond 21.

As illustrated in FIG. 4, which is a partially enlarged view of the joint area 18, the cores 17 include the oblique portions 22 including the parts overlapping the joint area 18 in a plan view. The oblique portions 22 are oblique to the width direction (the X-direction in FIG. 4) from the outer peripheral edge 18a toward the inner peripheral edge 18b of the joint area 18. In the same manner as or in a similar manner to the cores 17, the ridges 19 also include oblique portions in areas overlapping the joint area 18 in a plan view.

The cores 17 and the ridges 19 in the joint area 18 are thus longer than the cores 17 and the ridges 19 that are parallel to the width direction without extending obliquely. This structure increases the area of contact between the cladding layer 12 and the bond 21 in the parts overlapping the joint area 18 in a plan view, thus increasing the bonding strength of the lid 7 and the sealing reliability of the element mount portions 5.

The cores 17 are at larger intervals from one another at the inner peripheral edge 18b of the joint area than at the outer peripheral edge 18a of the joint area 18. When the lid 7 is bonded to the optical waveguide board 6 with the bond 21, thermal stress occurs between the lid 7 and the optical waveguide board 6. In the frame-shaped joint area 18, such thermal stress is larger at the outer peripheral edge 18a than at the inner peripheral edge 18b. At the outer peripheral edge 18a with larger stress, the multiple cores 17 (ridges 19) are at smaller intervals from one another. The multiple ridges 19 thus collectively increase the entire rigidity. This structure reduces distortion of the cores 17 inside the ridges 19 under stress at the outer peripheral edge 18a. In contrast, the ridges 19 are at larger intervals from one another at the inner peripheral edge 18b, allowing an area of bonding to be larger and thus increasing the bonding strength.

In the example illustrated in FIG. 7, the three cores 17 include a first core 17a located in the middle in a Y-direction and two second cores 17b spaced from the first core 17a. The two second cores 17b are curved in directions away from each other in a plan view. The oblique portions 22 including curved portions 23 are thus curved. The cores 17 with this structure are thus longer than the cores 17 with oblique portions extending linearly in the joint area 18, increasing the area of bonding between the cladding layer 12 and the bond 21 further. The curved oblique portions 22 can distribute stress in the cores 17 and the ridges 19 in different directions, and thus can improve stress distribution.

As illustrated in FIGs. 4 and 7, for example, the three cores 17 and the three ridges 19 extend from the recess 13 through the joint area 18 in the width direction in a plan view, or specifically, through a middle portion of the joint area 18 in a length direction (Y-direction) intersecting with the width direction, to outside the recess 13 through the outer peripheral edge 18a of the joint area 18. The three cores 17 then merge with one another outside the outer peripheral edge 18a to form a merging portion 24. In the merging portion 24, three colors of light are combined into white light. The white light is guided outside the joint area 18 by a waveguide 25 including the three cores 17 integrated together, and enters the condenser lens 8.

The merging portion 24 including the cores 17 is located outside the joint area 18 (outside the outer peripheral edge 18a). The multiple ridges 19 are thus spaced from one another across the full width of the joint area 18, increasing the area of contact between the cladding layer 12 and the bond 21 and thus improving stress distribution and heat dissipation.

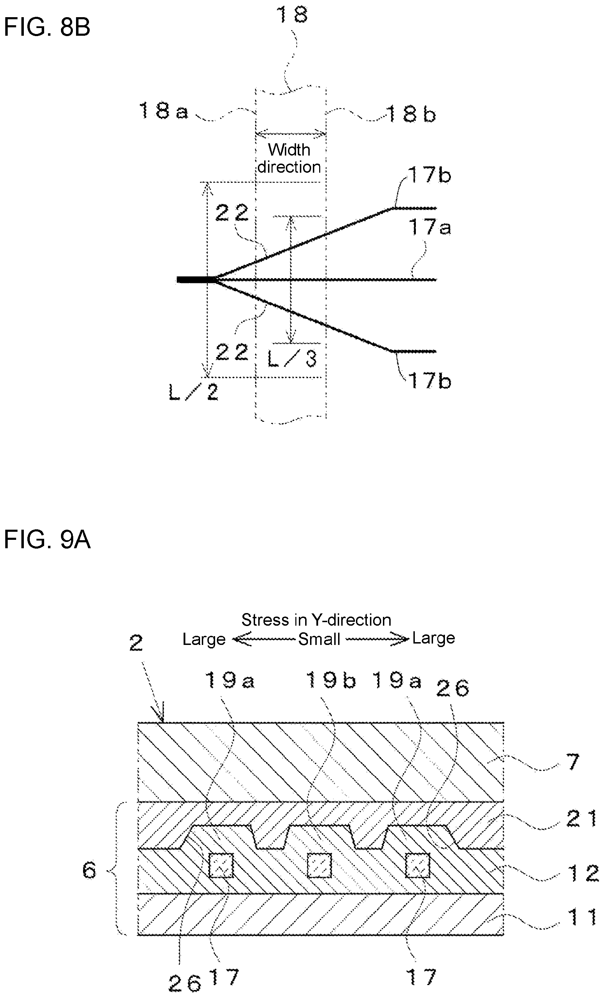

FIGs. 8A and 8B are each a schematic plan view of the oblique portions 22 illustrating their arrangement. As illustrated schematically in FIGs. 8A and 8B, the three cores 17 are located in the middle portion of the joint area 18 in the Y-direction. The three cores 17 overlap the middle portion, in which relatively smaller stress occurs in the Y-direction. Note that the middle portion in the Y-direction is included in the range of a length L/2, or more specifically, in the range of a length L/3 as illustrated in FIG. 8B, where L is the full length of the joint area 18 in the Y-direction as illustrated in FIG. 8A. When the cores 17 and the ridges 19 are located within these ranges, the core 17 can have less distortion under thermal stress described above, allowing the optical waveguide board to have high optical signal transmission characteristics.

In the optical waveguide board 6 illustrated in FIGs. 8A and 8B, the multiple cores 17 include the first core 17a in the middle portion of the joint area 18 in the length direction (Y-direction) intersecting with the width direction (X-direction) and the second cores 17b spaced from the first core 17a in the length direction. The second cores 17b may not be located all in the middle portion. In this case, the first core 17a and the second cores 17b may be at larger intervals from one another at the inner peripheral edge 18b of the joint area 18 than at the outer peripheral edge 18a of the joint area 18. The first core 17a is located in the middle portion in the Y-direction with relatively smaller stress, and thus has less distortion under stress. The second cores 17b spaced from the first core 17a in the Y-direction are located, at the peripheral edge 18a of the joint area 18 with relatively larger stress in the width direction, closer to the first core 17a in the middle portion with smaller stress, and thus have less distortion under stress. In contrast, at the inner peripheral edge 18b with relatively smaller stress, the second cores 17b and the first core 17a are at larger intervals from one another, thus increasing the area of contact between the cladding layer 12 and the bond 21. This structure improves the transmission characteristics of optical signals and the sealing reliability.

Note that the middle portion in the Y-direction is included in the range of the length L/2, or more specifically, in the range of the length L/3 as illustrated in FIG. 8B, where L is the full length of the joint area 18 in the Y-direction as illustrated in FIG. 8A. The cores 17 and the ridges 19 located within these ranges can reduce distortion under stress resulting from shrinkage or expansion of the bond 21 during curing, and achieve a sufficiently large area of contact. This increases the sealing reliability of the element mount portions 5.

In the example illustrated in FIG. 9A, the three ridges 19 include two ridges 19a located at the ends of the joint area 18 in the Y-direction and a middle ridge 19b. The two ridges 19a each include a side surface with a slope 26 sloping at a larger angle than a side surface of the middle ridge 19b. The multiple ridges 19 include side surfaces including a side surface sloping at a greater angle than another side surface. The side surface sloping at the greater angle than the other side surface is located outermost of the side surfaces in the length direction intersecting with the width direction of the joint area 18. In other words, the ridge 19 located at the end in the length direction includes its outer surface sloping at the greater angle than the other side surfaces. Each of the ridges 19a farthest from the middle in the Y-direction with larger stress thus includes the side surface with a larger surface area. This increases the bonding strength of the lid 7 and also distributes stress more effectively.

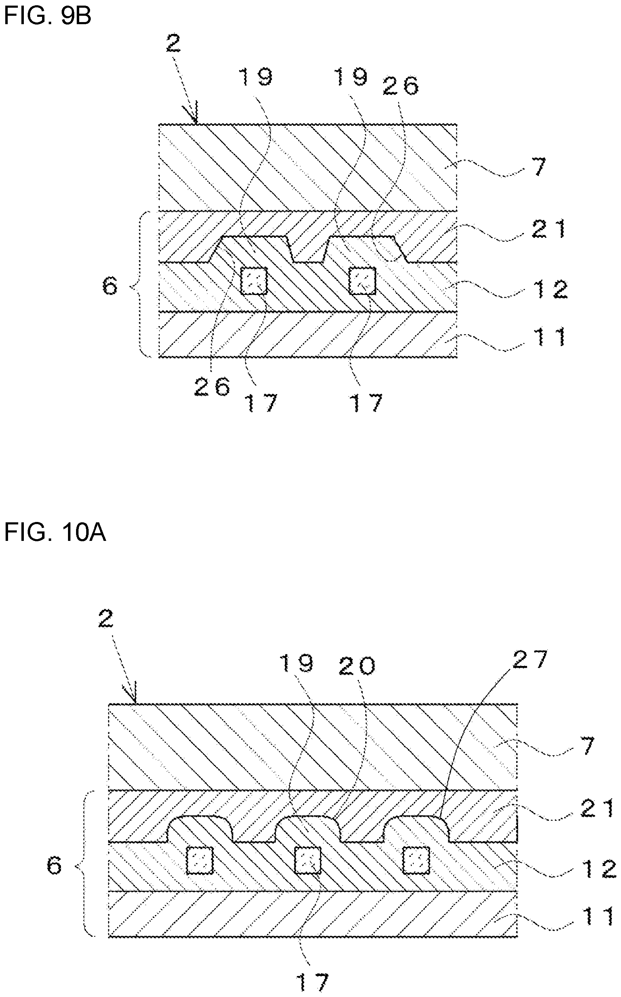

For a structure with two cores 17 as illustrated in FIG. 9B, two ridges 19 each include the slope 26, on an outer side surface in the Y-direction, sloping at a larger angle than an inner side surface in the Y-direction. In this case as well, the side surfaces outermost in the Y-direction have increased surface areas and thus increase the bonding strength of the lid 7.

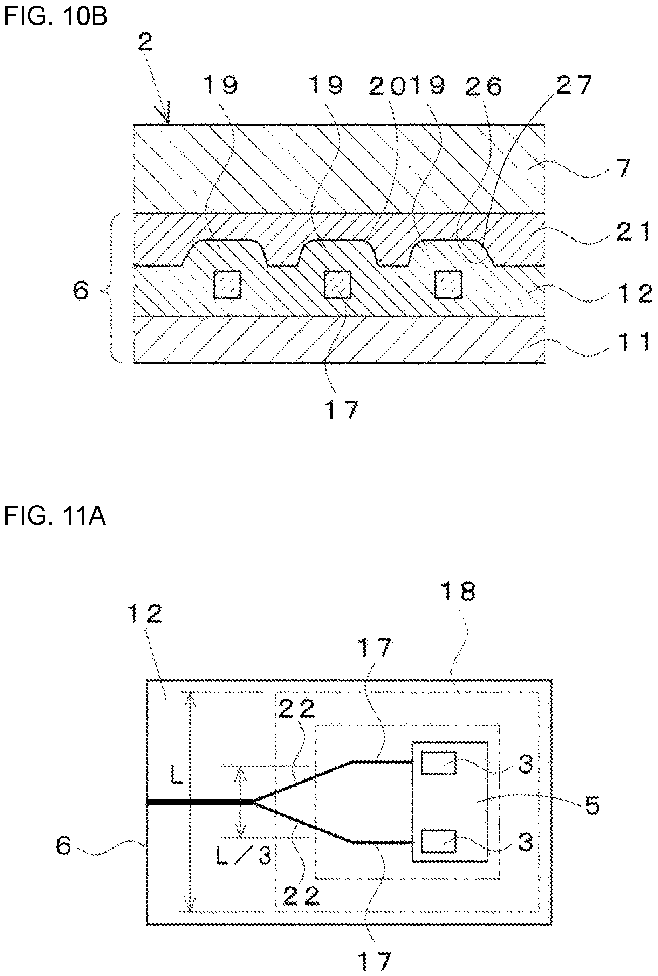

In the example illustrated in FIG. 10A, each of the ridges 19 has rounded corners 27 in its parts overlapping the joint area or the bond 21 in a plan view. In the example illustrated in FIG. 10B, the ridges 19 located outermost in the positive and negative Y-directions each include the slope 26 with a larger angle and the rounded corners 27. This structure can prevent stress concentrating on the corners of the ridges 19 when the bond 21 shrinks.

Note that, with the element mount portions 5 including two light emitters 3 as illustrated in FIG. 11A, two cores 17 may be located in the parts overlapping the joint area 18, although the three cores 17 are located in the parts overlapping the joint area 18 in a plan view in the example illustrated in FIG. 8A. In this case as well, the two cores 17 may extend, in the middle portion of the j oint area 18 in the Y-direction, obliquely to the width of the j oint area 18 perpendicular to the Y-direction, or more specifically, the two cores 17 may extend obliquely in the narrow range of the length L/3 as the middle portion, where L is the full length of the joint area 18 in the Y-direction. The two cores 17 are both located in the middle portion in the Y-direction with relatively smaller stress. This reduces deformation of the core 17 under stress. The two cores 17 may extend greatly obliquely in the directions away from each other from the outer peripheral edge 18a to the inner peripheral edge 18b of the joint area 18. In other words, the two cores 17 may be at a larger interval from each other at the inner peripheral edge 18b of the j oint area 18 than at the outer peripheral edge 18a of the j oint area 18. At the outer peripheral edge 18a with relatively larger stress, the cores 17 are located in the middle portion with smaller stress, and thus have less distortion under stress. In contrast, at the inner peripheral edge 18b with relatively smaller stress, the two cores 17 are at a larger interval from each other, thus increasing the area of contact between the cladding layer 12 and the bond 21. This structure improves the transmission characteristics of optical signals and the sealing reliability. This structure increases the area of bonding between the ridges 19 and the lid 7, allowing the element mount portions 5 to be sealed more tightly.

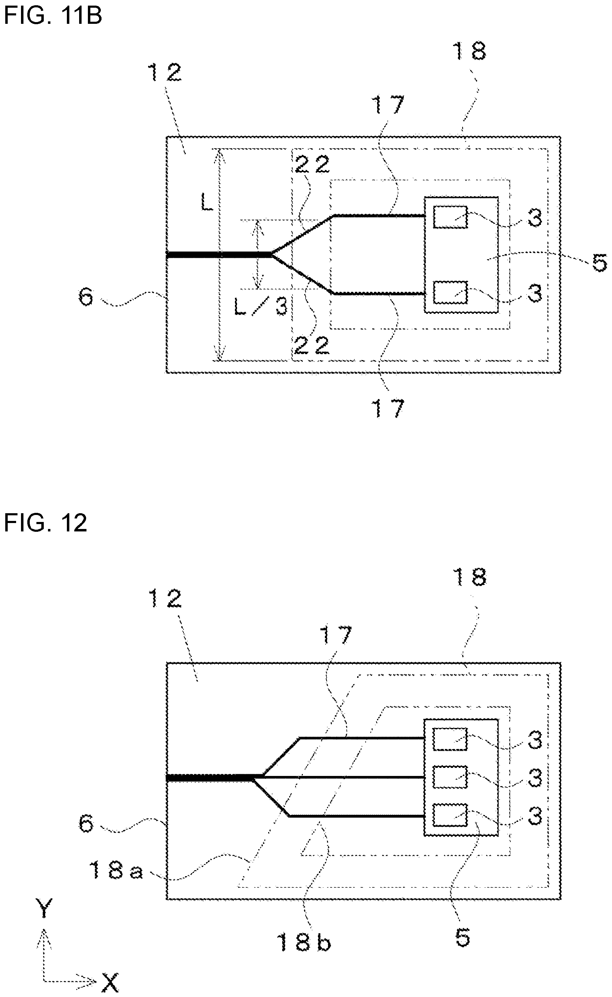

As illustrated in FIG. 11B, the two cores 17 may be located in the middle portion at the outer peripheral edge 18a of the joint area 18 and may be greatly obliquely extend in the directions away from each other to the inner peripheral edge 18b. The two cores 17 may be located outside the middle portion at the inner peripheral edge 18b. The two cores 17 may not be located entirely in the middle portion of the joint area 18, depending on the size of the joint area 18 and stress in the joint area 18.

In the example illustrated in FIG. 8A, the three cores 17 extend, in their parts overlapping the joint area 18, in the directions away from one another in the Y-direction from the outer peripheral edge 18a to the inner peripheral edge 18b. However, when the joint area 18 is oblique to the X-direction of the optical waveguide board 6 as illustrated in FIG. 12, the three cores 17 may extend parallel to one another in their parts overlapping the joint area 18 in a plan view. In this case as well, each of the cores 17 is oblique to the width direction from the outer peripheral edge 18a toward the inner peripheral edge 18b of the joint area 18. The width direction is perpendicular to the outer peripheral edge 18a and the inner peripheral edge 18b. This structure produces the same advantageous effects as in the example illustrated in FIG. 8A. In this case as well, each of the cores 17 may include the curved portion in the oblique portion 22. As in the example illustrated in FIG. 12, the multiple cores 17 may not be away from one another.

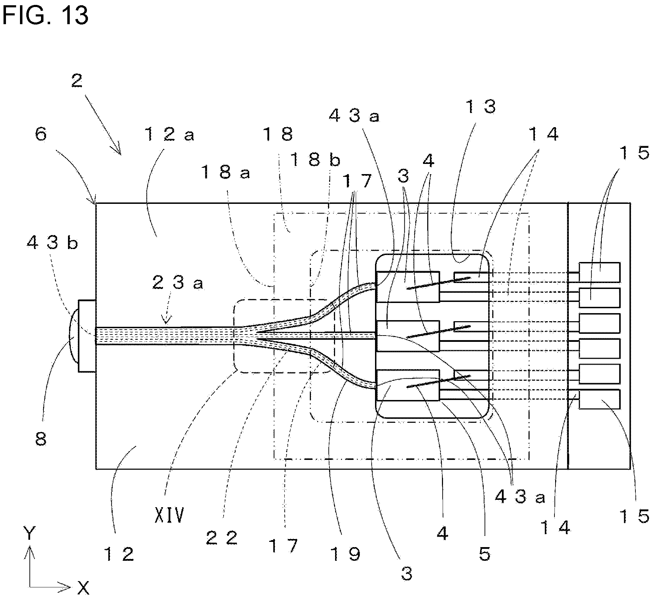

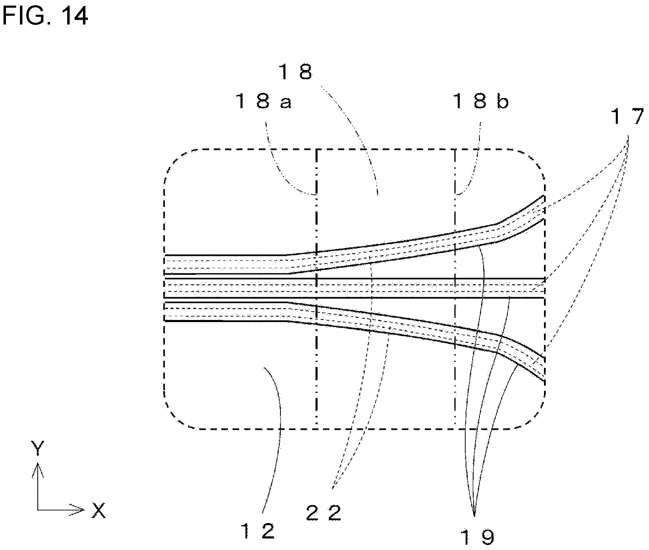

FIG. 13 is a plan view of a light source module according to another embodiment. FIG. 14 is an enlarged plan view of a part XIV in FIG. 13 in the other embodiment. Note that like reference numerals denote the corresponding components in the above embodiment. Such components will not be described repeatedly. In the above embodiment, the structure includes the merging portion 24 in which the three cores 17 merge with one another into the single waveguide 25. The single waveguide 25 then extends to the emission end. In the other embodiment illustrated in FIG. 13 as well, three incident end faces 43a of the cores 17 are spaced from one another to align with the respective light emitters 3 with the center of each of the incident end faces 43a matching an optical axis of the corresponding light emitter 3. The emission end faces 43b of the three cores 17 are closer to one another but separate from one another. In this manner, between the incident end faces 43a and the emission end faces 43b, the three cores 17 may converge closer to one another and then extend parallel to one another to the respective emission end faces 43b. The three cores 17 may not be parallel to one another and may be substantially parallel to one another at intervals decreasing toward the emission ends. The cores 17 may bend largely closer to one another and then extend at intervals decreasing to the emission ends. The cores 17 may bend greatly closer to one another and then extend substantially parallel to one another to the emission ends. In this structure, the cores 17 adjacent to one another may be at intervals decreasing from a portion in which the cores 17 are closer to one another to the emission ends. Light emitted through the emission end faces 43b of the respective cores 17 may be merged through, for example, the condenser lens 8. Light may be emitted from each of the cores 17 in a manner, for example, parallel to one another through the lens 8. In this case, images formed with light emitted through the three emission end faces 43a may be combined with, for example, an external device.

The cladding layer 12 includes the ridges 19 along the three cores 17 as in the above embodiment. In the example illustrated in FIG. 13, as in the above embodiment, the three ridges 19 adjacent to the incident end faces 43a may be combined into one wide ridge 19 in a section from the portion in which the three cores 17 are closer to one another to the emission end face 43b. Alternatively, as in the example illustrated in FIGs. 14A and 14B, the three ridges 19 may extend along the respective three cores 17 from the incident end to the emission end. In either case, the three ridges 19 may be at intervals from one another inside and outside the joint area 18. More specifically, a portion in which the three cores 17 or the three ridges 19 are closer to one another and then extend parallel to one another and a portion in which the three ridges 19 are combined into the single ridge 19 both correspond to the merging portion 24 in the above embodiment. These portions may be located outside the outer peripheral edge 18a of the joint area 18.

In another embodiment of the present disclosure, the structure may not include two or three cores 17 unlike the above embodiment. When at least one of the multiple cores 17 includes, in its part overlapping the joint area 18 in a plan view, the oblique portion 22 oblique to the width direction (X-direction) from the outer peripheral edge 18a toward the inner peripheral edge 18b of the joint area 18, the element mount portions 5 can be sealed more tightly.

In one or more embodiments of the present disclosure, the optical waveguide board, the optical waveguide package, and the light source module have an increased area of contact between the cladding layer and the bond when the lid is bonded to the joint area with the bond. This allows the element mount portions to be sealed more tightly with the lid, thus improving the sealing reliability of the element mount portions.

The optical waveguide package according to one or more embodiments of the present disclosure may have aspects (1) to (9) described below.
(1) An optical waveguide package, comprising:
   a substrate including a first surface;
   a cladding layer on the first surface, the cladding layer including a facing surface facing the first surface and an upper surface opposite to the facing surface, the cladding layer including a recess on the upper surface;
   a plurality of element mount portions in the recess; and
   a plurality of cores in the cladding layer, the plurality of cores extending from the recess to outside the recess in a plan view,
   wherein the cladding layer includes, on the upper surface, a joint area being frame-shaped and surrounding the recess, and includes a plurality of ridges extending along the plurality of cores, and
   at least one of the plurality of cores includes a part overlapping the joint area in a plan view, and the part includes an oblique portion extending in a direction oblique to a width direction from an outer peripheral edge toward an inner peripheral edge of the joint area in the cladding layer.
(2) The optical waveguide board according to (1), wherein
   the plurality of cores is at larger intervals from one another at an inner peripheral edge of the joint area than at an outer peripheral edge of the joint area.
(3) The optical waveguide board according to (1) or (2), wherein
   the at least one of the plurality of cores includes a curved portion curved in a plan view in the oblique portion.
(4) The optical waveguide board according to any one of (1) to (3), wherein
   the plurality of cores includes a merging portion in which the plurality of cores merges with one another outside the outer peripheral edge of the joint area.
(5) The optical waveguide board according to any one of (1) to (4), wherein
   the plurality of cores overlaps a middle portion of the joint area in a length direction intersecting with the width direction.
(6) The optical waveguide board according to any one of (1) to (5), wherein
   the plurality of cores includes a first core located in a middle portion of the joint area in a length direction intersecting with the width direction, and a second core spaced from the first core in the length direction, and
   the first core and the second core are at a larger interval from each other at the inner peripheral edge of the j oint area than at the outer peripheral edge of the j oint area.
(7) The optical waveguide board according to any one of (1) to (6), wherein
   the plurality of cores is located in a middle portion of the joint area in a length direction intersecting with the width direction at the outer peripheral edge, and
   the plurality of cores is at larger intervals from one another at the inner peripheral edge of the joint area than at the outer peripheral edge of the joint area.
(8) The optical waveguide board according to any one of (1) to (7), wherein
   the plurality of ridges includes side surfaces including a side surface sloping at a greater angle than another side surface, and the side surface sloping at the greater angle than the other side surface is located outermost of the side surfaces in a length direction intersecting with the width direction of the joint area.
(9) The optical waveguide board according to any one of (1) to (8), wherein
   the plurality of ridges includes a rounded ridge corner in the joint area.
   The optical waveguide package according to one or more embodiments of the present disclosure may have aspect (10) described below.
(10) An optical waveguide package, comprising:
   the optical waveguide board according to any one of (1) to (9); and
   a lid covering an opening of the recess on the cladding layer in the optical waveguide board and bonded to the joint area with a bond.
   The light source module according to one or more embodiments of the present disclosure may have aspect (11) described below.
(11) A light source module, comprising:
   the optical waveguide package according to (10); and
   light emitters in the plurality of element mount portions in the optical waveguide package.

The present invention is not limited to the above embodiments and may be implemented with components having shapes or structures changed as appropriate without departing from the spirit and scope of the present invention. For example, the light source module 1 illustrated in FIG. 1 may include LEDs as the light emitters 3. Light receivers may be added in the element mount portions 5 in the optical waveguide board 6. The lens may be eliminated. The element mount portions 5 may be sealed with an associated optical device in place of the lid 7.

In the present embodiment, the optical waveguide board 6, the optical waveguide package 2, and the light source module 1 each have an increased area of contact between the cladding layer 12 and the bond 21 when the lid 7 is bonded to the joint area 18 with the bond 21. This allows the element mount portions 5 to be sealed more tightly with the lid 7, thus improving the sealing reliability of the element mount portions 5.

### REFERENCE SIGNS

- 1: light source module
- 2: optical waveguide package
- 3: light emitter
- 4: bonding wire
- 5: element mount portion
- 6: optical waveguide board
- 7: lid
- 11: substrate
- 11a: first surface
- 12: cladding layer
- 12a: upper surface
- 13: recess
- 16: conductive bond
- 17: core
- 18: joint area
- 18a: outer peripheral edge
- 18b: inner peripheral edge
- 19: ridge
- 21: bond
- 22: oblique portion

## Claims

1. An optical waveguide board, comprising:
a substrate including a first surface;
a cladding layer on the first surface, the cladding layer including a facing surface facing the first surface and an upper surface opposite to the facing surface, the cladding layer including a recess on the upper surface;
a plurality of element mount portions in the recess; and
a plurality of cores in the cladding layer, the plurality of cores extending from the recess to outside the recess in a plan view,
wherein the cladding layer includes, on the upper surface, a joint area being frame-shaped and surrounding the recess, and includes a plurality of ridges extending along the plurality of cores, and
at least one of the plurality of cores includes a part overlapping the joint area in a plan view, and the part includes an oblique portion extending in a direction oblique to a width direction from an outer peripheral edge toward an inner peripheral edge of the joint area in the cladding layer.

2. The optical waveguide board according to claim 1, wherein
the plurality of cores is at larger intervals from one another at an inner peripheral edge of the joint area than at an outer peripheral edge of the joint area.

3. The optical waveguide board according to claim 1 or claim 2, wherein
the at least one of the plurality of cores includes a curved portion curved in a plan view in the oblique portion.

4. The optical waveguide board according to any one of claims 1 to 3, wherein
the plurality of cores includes a merging portion in which the plurality of cores merges with one another outside the outer peripheral edge of the joint area.

5. The optical waveguide board according to any one of claims 1 to 4, wherein
the plurality of cores overlaps a middle portion of the joint area in a length direction intersecting with the width direction.

6. The optical waveguide board according to any one of claims 1 to 5, wherein
the plurality of cores includes a first core located in a middle portion of the joint area in a length direction intersecting with the width direction, and a second core spaced from the first core in the length direction, and
the first core and the second core are at a larger interval from each other at the inner peripheral edge of the j oint area than at the outer peripheral edge of the j oint area.

7. The optical waveguide board according to any one of claims 1 to 6, wherein
the plurality of cores is located in a middle portion of the joint area in a length direction intersecting with the width direction at the outer peripheral edge, and
the plurality of cores is at larger intervals from one another at the inner peripheral edge of the joint area than at the outer peripheral edge of the joint area.

8. The optical waveguide board according to any one of claims 1 to 7, wherein the plurality of ridges includes side surfaces including a side surface sloping at a greater angle than another side surface, and the side surface sloping at the greater angle than the other side surface is located outermost of the side surfaces in a length direction intersecting with the width direction of the joint area.

9. The optical waveguide board according to any one of claims 1 to 8, wherein the plurality of ridges includes a rounded ridge corner in the joint area.

10. An optical waveguide package, comprising:
the optical waveguide board according to any one of claims 1 to 9; and
a lid covering an opening of the recess on the cladding layer in the optical waveguide board and bonded to the joint area with a bond.

11. A light source module, comprising:
the optical waveguide package according to claim 10; and
light emitters in the plurality of element mount portions in the optical waveguide package.
